# FASCICULE DE BREVET EUROPEEN

(11) **EP 3 999 300 B1**
(45) Date de publication et mention de la délivrance du brevet: **12.03.2025**
(21) Numéro de dépôt: 20737051.1
(22) Date de dépôt: 13.07.2020
(51) Int. Cl.: B29C 44/22, B29C 44/50, B29C 44/56, E04B 2/96, C08J 9/12, C08J 9/14, C08J 9/36

(54) **PROCÉDÉ DE FABRICATION D'UN PROFILÉ MOUSSÉ À CAVITÉS ET PROFILÉS MOUSSÉS À CAVITÉS**
VERFAHREN ZUR HERSTELLUNG GESCHÄUMTER HOHLKAMMERPROFILE UND GESCHÄUMTE HOHLKAMMERPROFILE
METHOD FOR PRODUCING FOAMED HOLLOW CHAMBER PROFILES AND FOAMED HOLLOW CHAMBER PROFILES

(30) Priorité: 18.07.2019 BE 201905472
(43) Date de publication de la demande: 25.05.2022
(73) Titulaire: NMC S.A., 4731 Eynatten (BE)
(72) Inventeur: MEESSEN, Silvain, 4840 Welkenraedt (BE); MAYERES, Jean-Pierre, 4700 Eupen (BE)
(74) Mandataire: Office Freylinger
(86) Numéro de dépôt international: PCT/EP2020/069753
(87) Numéro de publication internationale: WO 2021/009121

(56) Documents cités:
- WO-A1-2016/087654
- DE-A1- 4 316 863
- US-A1- 2003 082 346

## Description

### Domaine technique

La présente invention concerne d'une manière générale le domaine de l'isolation thermique et en particulier les profilés moussés comprenant des cavités, particulièrement utiles le domaine des dispositifs de rupture de pont thermique dans la construction relative aux vitrages, portes, éléments de façades, etc.

### Etat de la technique

Les profilés moussés de sections très variées sont utilisés dans de nombreux domaines où l'isolation thermique ou acoustique joue un rôle important. Par exemple, dans le domaine de la construction, en particulier dans la construction métallique ou dans le domaine de la fabrication des portes, fenêtres ou parements de façade comprenant notamment des éléments de construction en matières compactes plastiques ou métalliques, il est bien connu qu'il faut prévoir des ruptures de ponts thermiques. En effet, un pont thermique est une zone ponctuelle ou linéaire qui, dans l'enveloppe d'un bâtiment, présentent une augmentation de la conductivité thermique. Il s'agit d'un point de la construction où la barrière isolante est rompue, entrainant non seulement des pertes de chaleur vers l'extérieur, mais également la condensation et donc l'humidité à l'intérieur. Comme les bâtiments sont de plus en plus étanches, le renouvellement de l'air y est limité, et les parois restent humides. Des moisissures et des mauvaises odeurs en résultent pouvant entrainer le développement d'allergies chez certaines personnes.

Actuellement, pour des éléments de constructions ayant tant une face intérieure et une face exposée à l'extérieur, on recourt couramment à des éléments dits « rupteurs de pont thermique » ou « isolateurs ». Dans la pratique, un cadre de fenêtre entier peut être fabriqué en une matière peu conductrice de chaleur comme le PVC, ou en métal, c'est-à-dire en un matériau fortement conducteur de chaleur. Le cadre présentera habituellement une face (ou profilé) intérieure, une face (ou profilé) extérieure séparée par des éléments peu conducteurs de chaleurs, par exemple des connecteurs isolants ou isolateurs en matière synthétique.

Ces isolateurs servant à rompre/éviter les ponts thermiques doivent toutefois être suffisamment rigides et solides pour ne pas être déformés ou brisés lors de leur insertion dans le clip de l'élément de structure et par exemple lors du vissage d'une vis de fixation qui les traverse de part en part. Par conséquent, ils se présentent généralement comme des profilés longitudinaux avec des côtés longs munis de sections particulières destinées à se fixer par encliquetage, par emboîtement, par enclenchement, par insertion, etc. dans ou sur des sections de forme sensiblement complémentaire de l'un des profilés ou éléments de construction. De plus, ils sont fabriqués en une matière synthétique solide, notamment le PVC, le PP, le PA, etc. Outre les raisons sanitaires de réduire les effets des ponts thermiques, les exigences en matière de performance énergétique des bâtiments sont en continuelle croissance.

Il est bien connu également que la conduction thermique d'un profilé moussé ou non peut être réduite davantage en prévoyant des cavités dans la section transversale perpendiculaire, ces cavités entravant ainsi le flux d'énergie, ce qui résulte en une meilleure isolation thermique.

S'il est bien connu de former des cavités d'une section relativement grande (p. ex. supérieure à 10 cm²) dans des profilés moussés si les exigences en termes de précision dimensionnelle ne sont pas trop élevés, par extrusion en utilisant à la filière de sortie un ou plusieurs pointeaux placés à l'intérieur du flux de composition polymère à mousser provenant de l'extrudeuse, l'obtention de cavités de section réduite, p. ex. de l'ordre de 5 cm², voire moins de 2 cm², n'est plus réalisable de cette manière. Si des cavités de telles dimensions sont recherchées, la seule solution connue est de fabriquer le profilé en deux (ou plusieurs) parties (profilés partiels), d'usiner chaque partie de manière à y créer les parties ouvertes de cavités et de les assembler ensuite par soudage ou collage pour former des profilés moussés comprenant des cavités fermées, tel que décrit par exemple dans la demande de brevet internationale WO 2016/087654 A1.

Outre les désavantages de la multiplication des étapes de fabrication, l'assemblage de plusieurs profilés partiels rend la fabrication en ligne quasi impraticable. Dans la pratique, un tel assemblage génère en tout cas de nombreuses manipulations et est de ce fait le maillon faible en termes de cadence et de coûts de production.

### Objet de l'invention

Un objet de la présente invention est par conséquent de proposer des profilés moussés d'isolation comprenant des cavités (et un procédé de fabrication), en particulier des profilés moussés de petites sections (p. ex. inférieures à 15 cm²) avec des cavités de petites sections (p. ex. inférieures à 2 cm²), notamment pour l'utilisation comme élément d'isolation, de préférence comme isolateur entre deux profilés de construction, les profilés moussés bénéficiant d'une solidité mécanique suffisante.

### Description générale de l'invention

Afin de résoudre le problème mentionné ci-dessus, la présente invention propose, dans un premier aspect, un procédé de fabrication d'un profilé moussé comprenant une ou plusieurs cavités longitudinales de section fermée, le procédé comprenant les étapes de
(a) extrusion d'une première composition polymère, en présence d'un ou de plusieurs premiers agents moussants, en un profilé de base moussé de section polygonale, de préférence de section rectangulaire, la première composition polymère comprenant un ou plusieurs (co)polyesters,
(b) refroidissement du profilé de base moussé,
(c) création d'une (ou de plusieurs) tranchée(s) sur la longueur du profilé de base moussé par enlèvement de matière, de préférence par fraisage, découpage, laser, thermofusion, etc., la (ou chaque) tranchée formant deux branches parallèles dans le profilé de base moussé, chacune des branches comprenant une surface extérieure opposée à ladite tranchée et une surface intérieure faisant face à ladite tranchée, et
(d) extrusion à l'intérieur de la ou des tranchées, d'une deuxième composition polymère identique ou non à la première composition polymère, de préférence en présence d'un ou de plusieurs deuxièmes agents moussants, en une entretoise, à au moins un endroit entre les deux surfaces intérieures des deux branches de la tranchée, de manière à former au moins une cavité fermée à l'intérieur de la tranchée.

Le procédé selon l'invention ne requiert pas d'assemblage de plusieurs profilés partiels et toutes les étapes peuvent donc être réalisées en ligne, si on le souhaite. De plus, les inventeurs ont développé un procédé qui permet la création de cavités même de très petites dimensions dans des profilés présentant eux-mêmes des dimensions réduites. Il est clair que le procédé ci-dessus, permettant la réalisation même de cavités décalées dans des tranchées parallèles, est très flexible et applicable dans de nombreuses situations, même pour des profilés de section plus grands, où les multiples tranchées pourraient même ne pas être parallèles, mais être réalisés sur des côtés différents de la section polygonale du profilé de base moussé. L'usinage de l'étape (c) est de plus facilité par l'utilisation d'une première composition polymère à base de (co)polyester(s) qui donnent des mousses présentant une solidité mécanique relativement élevée.

Il est souvent requis de munir l'extérieur du profilé moussé d'une forme ou d'un contour particulier. Ceci peut se faire d'une part par enlèvement de matière ou d'autre part par ajout de matière.

Une variante avantageuse du procédé prévoit de travailler le contour extérieur du profilé par enlèvement de matière, par exemple en prévoyant, après l'étape (b), une étape (c') de création d'un élément de contour extérieur sur au moins un des côtés du profilé de base moussé par enlèvement de matière, de préférence par fraisage, découpage, laser, thermofusion, ..., de préférence, l'étape (c') est réalisée simultanément avec l'étape (c).

Une variante avantageuse du procédé prévoit de travailler le contour extérieur du profilé par ajout de matière, par exemple en prévoyant en outre une étape (x) d'extrusion d'une troisième composition polymère, de préférence en présence d'un ou de plusieurs troisièmes agents moussants, en un nombre d'ailettes sur un ou plusieurs côtés du profilé de base, l'étape (x) pouvant être réalisée pendant l'étape (a) par coextrusion ou par extrusion séparée après l'une des étapes ultérieures, de préférence avant, pendant ou après l'étape (d). En fonction de l'application ces ailettes peuvent servir notamment d'éléments d'appui, de moyens de compartimentation de l'espace adjacent lorsque la pointe des ailettes est à une distance de 0 à 2 mm de l'élément de construction adjacent afin de réduire la convection dans cet espace, ou encore de rigoles de drainage de l'eau.

D'autres variantes particulièrement avantageuses prévoient la modification du contour extérieur tant par enlèvement que par ajout de matière selon l'endroit du contour du profilé de base moussé.

Comme déjà mentionné plus haut, les (co)polyesters permettent de donner une certaine solidité mécanique aux profilés, cette solidité étant avantageuse tant dans le produit fini que lors des étapes d'usinage par enlèvement de matière. Par conséquent, la première composition polymère comprend de préférence au moins un polyester ou copolyester choisi parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, de manière particulièrement préféré le polyester comprend ou est constitué de polyéthylène téréphtalate. De manière générale, la première composition polymère peut comprendre d'autres polymères compatibles, par exemple des thermoplastiques élastomères (TPE), tels que les thermoplastiques élastomères polyesters (TPC), les thermoplastiques élastomères oléfiniques non vulcanisés (TPO), les thermoplastiques élastomères uréthane (TPU), les thermoplastiques élastomères styréniques (TPS), les thermoplastiques élastomères polyamides (TPA), des copolymères d'éthylène, tels que les copolymères éthylène-acétate de vinyle (EVA), les copolymères éthylène-acrylate de méthyle (EMA), les copolymères éthylène-acrylate d'éthyle (EEA), les copolymères éthylène-acrylate de butyle (EBA), etc., modifiés ou non par des groupements tels l'anhydride maléique ou encore le glycidyl méthacrylate pour les rendre plus compatibles, du polycarbonate, du polystyrène, du polyamide, ..., mais généralement la teneur en polyester(s) dans la première composition polymère est supérieure à 60% en poids, de préférence supérieure à 75% en poids, de manière particulièrement préférée supérieure à 80% en poids, par rapport à la quantité totale de polymères dans la première composition polymère.

Pour réaliser les entretoises, une deuxième composition polymère est utilisée dont les (co)polymères sont identiques ou différents de ceux de la première composition polymère. D'une manière simplifiée, conviennent comme composant(s) de la deuxième composition polymère, les (co)polyesters mentionnés ci-dessus, ainsi que tout polymère compatible avec les (co)polyesters utilisés dans la première composition polymère, notamment des thermoplastiques élastomères (notamment TPC, TPA, TPO, TPU, ...), des copolymères d'éthylène (notamment EVA, EMA, EBA, EEA, ...), modifiés ou non par des groupements tels l'anhydride maléique ou encore le glycidyl méthacrylate pour les rendre plus compatibles, du polycarbonate, du polystyrène, du polyamide, etc. Les inventeurs ont cependant trouvé que des polymères particulièrement avantageux pour la deuxième composition polymère sont choisis de préférence parmi les thermoplastiques élastomères, de préférence le TPU et les mélanges de TPU avec d'autres copolymères d'éthylène. Avec ces compositions polymères, il est possible de former de manière fiable des entretoises attachées des deux côtés de la tranchée et d'épaisseur relativement fine (par exemple de l'ordre de 1 à quelques mm, voire moins), c'est-à-dire formant de manière fiable des cavités fermées, même de faibles dimensions. En effet, ces compositions peuvent être extrudées par des filières fines entrant dans la tranchée, chaque filière formant une entretoise à une profondeur différente de la tranchée, ce qui donne une série de cavités longitudinales parallèles à la longueur du profilé de base.

Pour les contours extérieurs par ajout de matière mentionnés ci-dessus, la troisième composition polymère peut comprendre les (co)polymères mentionnés pour la première et deuxième compositions polymères et comprend de préférence au moins un (co)polymère choisi parmi les thermoplastiques élastomères (notamment TPC, TPA, TPO, TPU, ...), les copolymères d'éthylène (notamment EVA, EMA, EBA, EEA, ...), modifiés ou non par des groupements tels l'anhydride maléique ou encore le glycidyl méthacrylate pour les rendre plus compatibles, le polycarbonate, le polystyrène, le polyamide, etc.

Toutes les compositions polymères décrites ici peuvent être moussées (la première l'étant obligatoirement). Les premiers, deuxièmes et troisièmes agents moussants utilisables dans le contexte du procédé peuvent être des agents moussants physiques ou chimiques ou une combinaison de ces deux types. Des agents chimiques d'expansion (CBA) sont des agents moussants qui se décomposent sous l'effet d'une élévation de température. Ils se classent en deux familles : les CBA exothermiques, comme l'azodicarbonamide (ADCA), l'OxydiBenzeneSulfonyl Hydrazide (OBSH), ... qui se décomposent en produisant de la chaleur. L'azodicarbonamide se décompose vers 210 °C, mais en présence d'un accélérateur de décomposition approprié, tel que l'oxyde de zinc et/ou le stéarate de zinc, la température de décomposition peut être abaissée d'environ 60 °C. Les CBA endothermiques se décomposent en absorbant de la chaleur. Par exemple, l'acide citrique, le bicarbonate de soude et leurs mélanges se décomposent entre 150 et 230 °C et produisent généralement moins de volume gazeux par gramme de CBA que les CBA exothermiques. Les agents moussants physiques tels que l'azote moléculaire, le dioxyde de carbone, les alcanes linéaires ou branchés en C1 à C4, se trouvent sous forme de gaz dans les conditions de température et de pression normales (0 °C, 1 atmosphère); les pentanes (isopentane, néopentane, normal-pentane, cyclopentane), l'hexane, l'heptane sont quant à eux des liquides aux conditions normales. Ces gaz ou liquides sont solubles dans la masse polymère fondue à haute température et sous haute pression, et forment une seule phase dans les conditions adéquates de pression et de température. En dépressurisant le système monophasique, la nucléation et la croissance des bulles de gaz devenues insolubles génèrent une structure cellulaire. Le ou les agents moussants sont choisis de préférence parmi l'isobutane, le cyclopentane et/ou le dioxyde de carbone.

Des densités appropriées des différentes (première, et éventuellement deuxième et/ou troisième) compositions polymères après moussage se situent généralement dans un intervalle de 30 kg/m³ à 800 kg/m³, de préférence de 50 à 500 kg/m³, particulièrement préféré de 60 à 350 kg/m³.

D'autres additifs peuvent généralement être utilisés indépendamment dans les trois compositions polymères, tels que des additifs nucléants (talc, stéarate de calcium, silice) qui facilitent la nucléation des bulles de la mousse et permettent de contrôler leur distribution, ou encore des agents chimiques utilisés pour accélérer la décomposition des agents moussants chimiques (voir ci-dessus), les agents anti-feu, les agents anti-UV, antioxydants, nucléateurs de cristallisation, les agents de branchement, les lubrifiants, ...

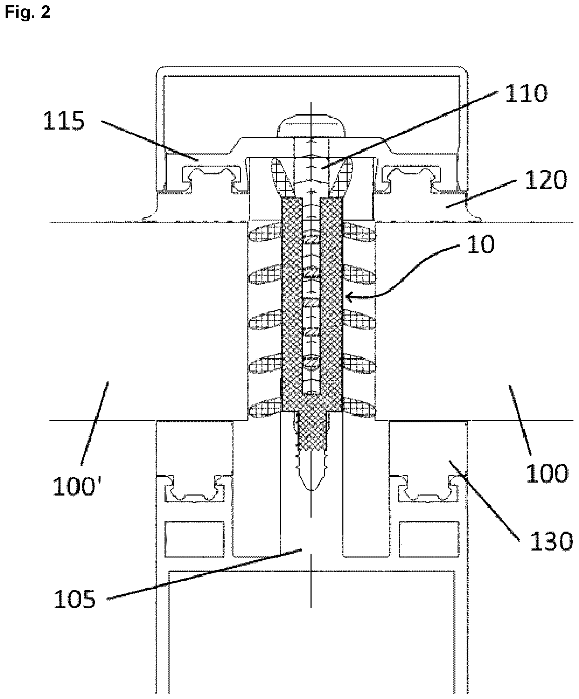

Dans un aspect particulièrement préféré de l'invention, le procédé est réalisé pour obtenir des isolateurs de réduction de l'effet thermique tel que décrits ci-dessus, c'est-à-dire dans le procédé défini ci-dessus, le profilé moussé comprenant une ou plusieurs cavités longitudinales de section fermée obtenu en fin de procédé est un isolateur de réduction de l'effet de pont thermique entre deux éléments de constructions connectés, le procédé comprenant généralement une étape (c') dans laquelle l'élément de contour extérieur sur un des côtés du profilé de base moussé est une tête d'isolateur de section plus étroite que celle du profilé de base moussé agencée du côté opposé de la tranchée. Les isolateurs selon l'invention comprenant une tranchée compartimentée par des entretoises présentent l'avantage pratique sur le chantier de faciliter la pénétration de la pointe des vis de fixation et leur guidage entre les éléments de construction pendant le vissage (voir par exemple Fig. 2).

Dans un autre aspect, l'invention propose un profilé moussé comprenant une ou plusieurs cavités longitudinales de section fermée comprenant un profilé de base moussé de section polygonale, de préférence de section rectangulaire, extrudé à partir d'une première composition polymère, en présence d'un ou de plusieurs premiers agents moussants, la première composition polymère comprenant au ou plusieurs (co)polyesters, le profilé de base moussé comprenant une tranchée formée par enlèvement de matière, de préférence par fraisage, découpage, laser, thermofusion, ..., ladite tranchée étant compartimentée en une ou plusieurs cavités fermées, parallèles à la longueur du profilé de base moussé, par un nombre d'entretoises, éventuellement moussées, extrudées à partir d'une deuxième composition polymère.

Comme décrit ci-dessus, le profilé moussé selon l'invention comprend de préférence en outre une partie du contour extérieur modifié par enlèvement de matière, de préférence par fraisage, découpage, laser, thermofusion, ... et/ou une partie du contour extérieur modifié par ajout de matière, de préférence par (co)extrusion d'un nombre d'ailettes ou d'autres structures annexes sur un ou plusieurs côtés du profilé de base.

De manière particulièrement préférée, le profilé moussé comprenant une ou plusieurs cavités longitudinales de section fermée selon l'invention est un isolateur de réduction de l'effet de pont thermique utilisable dans la construction entre deux éléments de constructions connectés, l'isolateur comprenant un élément de contour extérieur sur un des côtés du profilé de base moussé qui est une tête d'isolateur de section plus étroite que celle du profilé de base moussé et qui est agencée du côté opposé de la tranchée.

### Brève description des dessins

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
Fig. 1 a) à e): sont des coupes transversales d'une variante de profilé moussé comprenant plusieurs cavités fermées, en particulier un isolateur, selon l'invention et montrent l'évolution du profilé de base au cours des différentes étapes du procédé.
Fig. 2: est une coupe transversale d'une construction utilisant un profilé moussé comprenant plusieurs cavités fermées, en particulier un isolateur selon l'invention.

### Description d'une exécution préférée

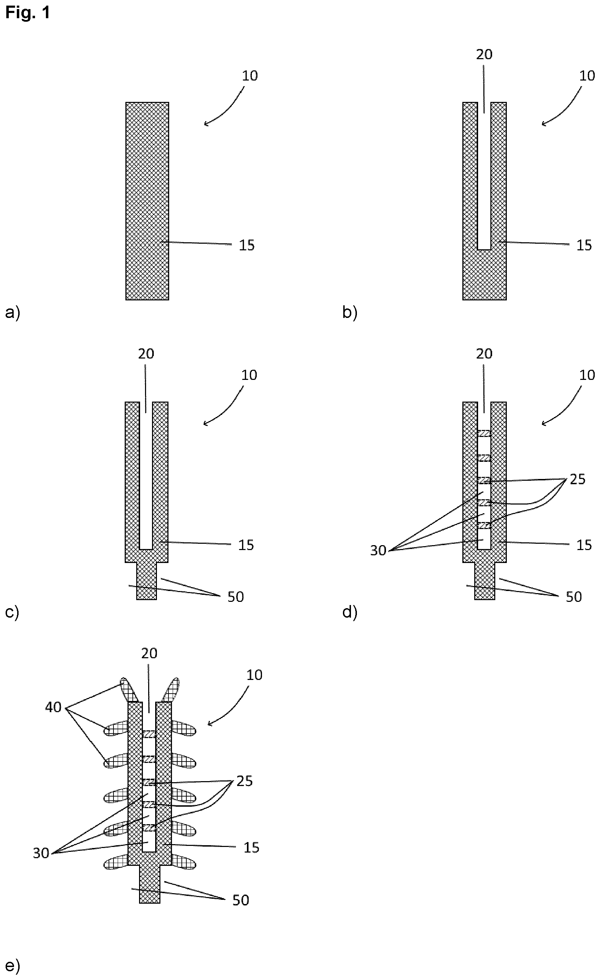

Les Fig. 1 a) à e) illustrent de manière schématique l'évolution du profilé de base au cours des différentes étapes du procédé jusqu'au profilé moussé comprenant une ou plusieurs cavités longitudinales de section fermée. Dans les Fig. 1 a) à e), la référence 10 désigne le profilé au stade respectif auquel il se trouve. La Fig. 1a) montre un profilé de base tel qu'il peut être obtenu à la fin de l'étape (b), par exemple un profilé de base 15 de section rectangulaire. Pendant l'étape (c) (Fig. 1 b)), une tranchée 20 est usinée dans le profilé de base 15. La profondeur de cette cavité 20 sera fonction des besoins de l'application envisagée. Généralement, la tranchée aura une profondeur P représentant 30 à 90 % de la dimension correspondante du profilé de base 15. L'étape (c'), qui peut être réalisée en même temps que l'étape (c), enlève une partie de chaque côté du profilé de base à l'extrémité opposée à (l'ouverture de) la tranchée 20 (Fig. 1 c)) de manière à former une tête qui peut être insérée par exemple dans la rainure d'un profilé 105 comme montré à la Fig. 2. Une étape importante de la présente invention est l'étape (d) de formation d'une ou de plusieurs entretoises 25 à l'intérieur de la tranchée 20 et parallèles à son fond situé à une profondeur P (Fig. 1 d)). Comme illustré à la Fig. 1 e) et à la Fig. 2, il peut être avantageux d'ajouter des ailettes 40 pendant une étape (x) afin d'améliorer les performances d'isolation d'un profilé moussé selon l'invention dans certaines applications. L'étape (x) peut être réalisé en même temps que l'étape (a) ou après l'étape (b), notamment avant, pendant ou après l'étape (d), l'ordre des Fig. 1a) à e) est illustratif et n'impose donc pas un seul ordre possible dans lequel les étapes du procédé doit être réalisées.

La Fig. 2 montre une coupe d'un exemple de construction utilisant un profilé moussé comprenant plusieurs cavités fermées, en particulier un isolateur 10 selon l'invention, comprenant (voir Fig. 1 e)) un profilé de base 15 avec une tranchée 20 dans laquelle ont été formées plusieurs cavités 30 par insertion d'entretoises 25, la tranchée avec les entretoises étant traversée par endroits par des vis de fixation 110. La vue montre la disposition comprenant un profilé de support 105 avec des joints inférieurs 130 sur lesquels sont déposés les vitrages ou panneaux 100, 100'. L'isolateur est introduit de manière à fixer sa tête dans une rainure du profilé support 105 entre les panneaux ou vitrages 100, 100'. Une vis de fixation 110 traverse l'isolateur 10 et relie un profilé de façade 115 (qui peut être muni d'un cache) et des joints supérieurs 120 au profilé de support 105. Dans le cas illustré à la Fig. 2, le bout des ailettes 40 se trouvent de préférence à une distance entre 0 et 2 mm des éléments de construction, comme les vitrages ou panneaux 100, 100' et compartimenteront donc également cet espace afin de réduire les déperditions par convection.

### Légende:

- 10: profilé moussé
- 15: profilé moussé de base
- 20: tranchée
- 25: entretoises
- 30: cavités fermées
- 40: modification du contour extérieur par ajout de matière : formation d'ailettes
- 50: modification du contour extérieur par enlèvement de matière : formation d'une tête
- 100, 100': vitrage ou panneau
- 105: profilé support
- 110: vis de fixation
- 115: profilé de façade
- 120: joint supérieur
- 130: joint inférieur

## Revendications

1. Procédé de fabrication d'un profilé moussé (10) comprenant une ou plusieurs cavités longitudinales de section fermée (30), le procédé comprenant les étapes de
(a) extrusion d'une première composition polymère, en présence d'un ou de plusieurs premiers agents moussants, en un profilé de base moussé (15) de section polygonale, de préférence de section rectangulaire, la première composition polymère comprenant un ou plusieurs (co)polyesters,
(b) refroidissement du profilé de base moussé (15),
(c) création d'une tranchée (20) sur la longueur du profilé de base moussé (15) par enlèvement de matière, de préférence par fraisage, découpage, laser ou thermofusion, la tranchée (20) formant deux branches parallèles dans le profilé de base moussé, chacune des branches comprenant une surface extérieure opposée à la tranchée (20) et une surface intérieure faisant face à la tranchée (20), et
(d) extrusion à l'intérieur de la tranchée (20), d'une deuxième composition polymère identique ou non à la première composition polymère, de préférence en présence d'un ou de plusieurs deuxièmes agents moussants, en une entretoise (25), à au moins un endroit entre les deux surfaces intérieures des deux branches de la tranchée (20), de manière à former au moins une cavité fermée (30) à l'intérieur de la tranchée (20).

2. Procédé selon la revendication 1, comprenant en outre, après l'étape (b), une étape (c') de création d'un élément de contour extérieur sur au moins un des côtés du profilé de base moussé par enlèvement de matière, de préférence par fraisage, découpage, laser ou thermofusion, de préférence, l'étape (c') est réalisée simultanément avec l'étape (c).

3. Procédé selon la revendication 1 ou 2, comprenant en outre une étape (x) d'extrusion d'une troisième composition polymère, de préférence en présence d'un ou de plusieurs troisièmes agents moussants, en un nombre d'ailettes sur un ou plusieurs côtés du profilé de base, l'étape (x) pouvant être réalisée pendant l'étape (a) par coextrusion ou par extrusion séparée après l'une des étapes ultérieures, de préférence avant, pendant ou après l'étape (d).

4. Procédé selon l'une quelconque des revendications 1 à 3, dans lequel la première composition polymère comprend au moins un (co)polyester choisi parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, de manière particulièrement préféré le polyéthylène téréphtalate, éventuellement en mélange avec un ou plusieurs (co)polymères choisis parmi des thermoplastiques élastomères, tels que les thermoplastiques élastomères polyesters, les thermoplastiques élastomères oléfiniques non vulcanisés, les thermoplastiques élastomères uréthane, les thermoplastiques élastomères styréniques, les thermoplastiques élastomères polyamides, des copolymères d'éthylène, tels que les copolymères éthylène-acétate de vinyle, les copolymères éthylène-acrylate de méthyle, les copolymères éthylène-acrylate d'éthyle ou les copolymères éthylène-acrylate de butyle, modifiés ou non par des groupements tels l'anhydride maléique ou encore le glycidyl méthacrylate pour les rendre compatibles avec le ou les (co)polyesters, du polycarbonate, du polystyrène ou du polyamide ; la teneur en (co)polyester(s) dans la première composition polymère étant de préférence supérieure à 60% en poids, de manière davantage préférée supérieure à 75% en poids, de manière particulièrement préférée supérieure à 80% en poids.

5. Procédé selon l'une quelconque des revendications 1 à 4, dans lequel la deuxième composition polymère comprend au moins un (co)polymère choisi parmi les thermoplastiques élastomères, tels que les thermoplastiques élastomères polyesters, les thermoplastiques élastomères oléfiniques non vulcanisés, les thermoplastiques élastomères uréthane, les thermoplastiques élastomères styréniques, les thermoplastiques élastomères polyamides, les copolymères d'éthylène, tels que les copolymères éthylène-acétate de vinyle, les copolymères éthylène-acrylate de méthyle, les copolymères éthylène-acrylate d'éthyle, les copolymères éthylène-acrylate de butyle, modifiés ou non pour les rendre plus compatibles, du polycarbonate, du polystyrène, du polyamide ou des (co)polyesters choisis parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate ou leurs mélanges, de préférence des thermoplastiques élastomères et des copolymères d'éthylène greffés ou non d'anhydride maléique.

6. Procédé selon la revendication 3 ou selon l'une des revendications 4 et 5 en étant combiné avec la revendication 3, dans lequel la troisième composition polymère comprend au moins un polymère choisi parmi les thermoplastiques élastomères, tels que les thermoplastiques élastomères polyesters, les thermoplastiques élastomères oléfiniques non vulcanisés, les thermoplastiques élastomères uréthane, les thermoplastiques élastomères styréniques, les thermoplastiques élastomères polyamides, les copolymères d'éthylène, tels que les copolymères éthylène-acétate de vinyle, les copolymères éthylène-acrylate de méthyle, les copolymères éthylène-acrylate d'éthyle, les copolymères éthylène-acrylate de butyle, modifiés ou non par des groupements tels l'anhydride maléique ou encore le glycidyl méthacrylate pour les rendre plus compatibles, du polycarbonate, du polystyrène, du polyamide, ou des (co)polyesters choisis parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate ou leurs mélanges.

7. Procédé selon l'une quelconque des revendications 1 à 6, dans lequel le ou les premiers, deuxièmes et/ou troisièmes agents moussants sont choisis indépendamment parmi l'isobutane, le cyclopentane et/ou le dioxyde de carbone.

8. Procédé selon l'une quelconque des revendications 1 à 7, dans lequel les première, deuxième et/ou troisième compositions polymères comprennent indépendamment d'autres additifs, tels que des additifs nucléants comme le talc, le stéarate de calcium ou la silice, des agents chimiques accélérant la décomposition des agents moussants chimiques comme l'oxyde de zinc et/ou le stéarate de zinc, des agents anti-feu, des agents anti-UV, des antioxydants, des nucléateurs de cristallisation, des agents de branchement et/ou des lubrifiants.

9. Procédé selon l'une quelconque des revendications 1 à 8, dans lequel le profilé moussé comprenant une ou plusieurs cavités longitudinales de section fermée (30) obtenu en fin de procédé est un isolateur de réduction de l'effet de pont thermique entre deux éléments de constructions connectés, le procédé comprenant de préférence une étape (c') dans laquelle l'élément de contour extérieur sur un des côtés du profilé de base moussé est une tête d'isolateur de section plus étroite que celle du profilé de base moussé (15) agencée du côté opposé de la tranchée (20).

10. Profilé moussé (10) comprenant une ou plusieurs cavités longitudinales de section fermée (30), le profilé moussé (10) comprenant un profilé de base moussé (15) de section polygonale, de préférence de section rectangulaire, extrudé à partir d'une première composition polymère, en présence d'un ou de plusieurs premiers agents moussants, la première composition polymère comprenant un ou plusieurs polyesters, le profilé de base moussé comprenant une tranchée (20) formée par enlèvement de matière, de préférence par fraisage, découpage, laser ou thermofusion, ladite tranchée (20) étant compartimentée en une ou plusieurs cavités fermées (30), parallèles à la longueur du profilé de base moussé (15), par un nombre d'entretoises (25), éventuellement moussées, extrudées à partir d'une deuxième composition polymère.

11. Profilé moussé (10) selon la revendication 10, comprenant en outre une partie du contour extérieur modifié par enlèvement de matière, de préférence par fraisage, découpage, laser ou thermofusion ; et/ou comprenant en outre une partie du contour extérieur modifié par ajout de matière, de préférence par (co)extrusion d'une troisième composition polymère, de préférence en présence d'un ou de plusieurs troisièmes agents moussants, ou collage d'un nombre d'ailettes (40) sur un ou plusieurs côtés du profilé de base moussé (15).

12. Profilé moussé (10) selon l'une quelconque des revendications 10 ou 11, dans lequel la première composition polymère comprend au moins un (co)polyester choisi parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate, de manière particulièrement préféré le polyéthylène téréphtalate, éventuellement en mélange avec un ou plusieurs (co)polymères choisis parmi des thermoplastiques élastomères, tels que les thermoplastiques élastomères polyesters, les thermoplastiques élastomères oléfiniques non vulcanisés, les thermoplastiques élastomères uréthane, les thermoplastiques élastomères styréniques, les thermoplastiques élastomères polyamides, des copolymères d'éthylène, tels que les copolymères éthylène-acétate de vinyle, les copolymères éthylène-acrylate de méthyle, les copolymères éthylène-acrylate d'éthyle ou les copolymères éthylène-acrylate de butyle, modifiés ou non par des groupements tels l'anhydride maléique ou encore le glycidyl méthacrylate pour les rendre compatibles avec le ou les (co)polyesters, du polycarbonate, du polystyrène ou du polyamide ; la teneur en (co)polyester(s) dans la première composition polymère étant de préférence supérieure à 60% en poids, de manière davantage préférée supérieure à 75% en poids, de manière particulièrement préférée supérieure à 80% en poids.

13. Profilé moussé (10) selon l'une quelconque des revendications 10 à 12, dans lequel la deuxième composition polymère comprend au moins un polymère choisi parmi les thermoplastiques élastomères, tels que les thermoplastiques élastomères polyesters, les thermoplastiques élastomères oléfiniques non vulcanisés, les thermoplastiques élastomères uréthane, les thermoplastiques élastomères styréniques, les thermoplastiques élastomères polyamides, les copolymères d'éthylène, tels que les copolymères éthylène-acétate de vinyle, les copolymères éthylène-acrylate de méthyle, les copolymères éthylène-acrylate d'éthyle, les copolymères éthylène-acrylate de butyle, modifiés ou non par des groupements tels l'anhydride maléique ou encore le glycidyl méthacrylate pour les rendre plus compatibles, du polycarbonate, du polystyrène, du polyamide ou des (co)polyesters choisis parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate ou leurs mélanges, de préférence des thermoplastiques élastomères et des copolymères d'éthylène greffés ou non d'anhydride maléique.

14. Profilé moussé (10) selon la revendication 11 ou selon l'une des revendications 12 et 13 en étant combiné avec la revendication 11, lequel la troisième composition polymère comprend au moins un polymère choisi parmi les thermoplastiques élastomères, tels que les thermoplastiques élastomères polyesters, les thermoplastiques élastomères oléfiniques non vulcanisés, les thermoplastiques élastomères uréthane, les thermoplastiques élastomères styréniques, les thermoplastiques élastomères polyamides, les copolymères d'éthylène, tels que les copolymères éthylène-acétate de vinyle, les copolymères éthylène-acrylate de méthyle, les copolymères éthylène-acrylate d'éthyle, les copolymères éthylène-acrylate de butyle, modifiés ou non par des groupements tels l'anhydride maléique ou encore le glycidyl méthacrylate pour les rendre plus compatibles, du polycarbonate, du polystyrène, du polyamide, ou des (co)polyesters choisis parmi le polyglycolide ou poly(acide glycolique), le poly(acide lactique), la polycaprolactone, le polyhydroxyalcanoate, le polyéthylène adipate, le polybutylène succinate, le polyéthylène téréphtalate, le polybutylène téréphtalate, le polytriméthylène téréphtalate, le polyéthylène naphtalate ou leurs mélanges.

15. Profilé moussé (10) selon l'une quelconque des revendications 10 à 14, dans lequel les première, deuxième et/ou troisième compositions polymères comprennent indépendamment d'autres additifs, tels que des additifs nucléants comme le talc, le stéarate de calcium ou la silice, des agents chimiques accélérant la décomposition des agents moussants chimiques comme l'oxyde de zinc et/ou le stéarate de zinc, des agents anti-feu, des agents anti-UV, des antioxydants des nucléateurs de cristallisation, des agents de branchement et/ou des lubrifiants.

16. Profilé moussé (10) selon l'une quelconque des revendications 10 à 15, qui est un isolateur de réduction de l'effet de pont thermique entre deux éléments de constructions connectés, l'isolateur comprenant un élément de contour extérieur sur un des côtés du profilé de base moussé (15) qui est une tête (50) d'isolateur de section plus étroite que celle du profilé de base moussé et qui est agencée du côté opposé de la tranchée (20).

## Patentansprüche

1. Verfahren zum Herstellen eines Schaumstoffprofils (10), das einen oder mehrere längsgerichtete Hohlräume mit geschlossenem Querschnitt (30) umfasst, wobei das Verfahren die folgenden Schritte umfasst:
(a) Extrudieren einer ersten Polymerzusammensetzung, in Gegenwart eines oder mehrerer erster Treibmittel, in ein geschäumtes Basisprofil (15) mit polygonalem Querschnitt, vorzugsweise mit rechtwinkligem Querschnitt, wobei die erste Polymerzusammensetzung einen oder mehrere (Co-)Polyester enthält,
(b) Abkühlen des geschäumten Basisprofils (15),
(c) Erzeugen eines Grabens (20) über die Länge des geschäumten Basisprofils (15) durch Abtragen von Material, vorzugsweise durch Fräsen, Schneiden, Laser oder Thermofusion, wobei der Graben (20) zwei parallele Stränge in dem geschäumten Basisprofil bildet, wobei jeder der Stränge eine Außenfläche, die zu dem Graben (20) entgegengesetzt ist, und eine Innenfläche, die dem Graben (20) zugewandt ist, umfasst, und
(d) Extrudieren im Innern des Grabens (20) einer mit der ersten Polymerzusammensetzung identischen oder nicht identischen zweiten Poiymerzusammensetzung, vorzugsweise in Gegenwart eines oder mehrerer zweiter Treibmittel, in mindestens eine Querstrebe (25) an mindestens einer Stelle zwischen den zwei Innenflächen der zwei Stränge des Grabens (20), so dass mindestens ein geschlossener Hohlraum (30) im Inneren des Grabens (20) gebildet wird.

2. Verfahren nach Anspruch 1, ferner umfassend, nach dem Schritt (b), einen Schritt (c') des Erzeugens eines Außenkonturelements auf mindestens einer der Seiten des geschäumten Basisprofils durch Abtragen von Material, vorzugsweise durch Fräsen, Schneiden, Laser oder Thermofusion, wobei vorzugsweise der Schritt (c') gleichzeitig mit dem Schritt (c) durchgeführt wird.

3. Verfahren nach Anspruch 1 oder 2, ferner umfassend einen Schritt (x) des Extrudierens einer dritten Polymerzusammensetzung, vorzugsweise in Gegenwart eines oder mehrerer dritter Treibmittel, in eine Anzahl von Rippen auf einer oder mehreren Seiten des geschäumten Basisprofils, wobei der Schritt (x) während des Schrittes (a) durch Coextrudieren oder durch gesondertes Extrudieren nach einem der späteren Schritte durchgeführt wird, vorzugsweise vor, während oder nach dem Schritt (d).

4. Verfahren nach einem der Ansprüche 1 bis 3, bei dem die erste Polymerzusammensetzung mindestens einen (Co-) Polyester enthält, ausgewählt aus Polyglycolid oder Poly(glykolsäure), Poly(milchsäure), Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat, besonders bevorzugt Polyethylenterephthalat, gegebenenfalls in Gemisch mit einem oder mehreren (Copolymeren, ausgewählt aus elastomeren Thermoplasten, wie den elastomeren Polyester-Thermoplasten, den nicht vulkanisierten elastomeren Olefin-Thermoplasten, den elastomeren Urethan-Thermoplasten, den elastomeren Styrol-Thermoplasten, den elastomeren Polyamid-Thermoplasten, Ethylen-Copolymeren wie den Ethylen-Vinylacetat-Copolymeren, den Ethylen-Methylacrylat-Copolymeren, den Ethylen-Ethylacrylat-Copolymeren oder den Ethylen-Butylacrylat-Copolymeren, modifiziert oder nicht modifiziert durch Gruppen wie Maleinanhydrid oder auch Glycidylmethacrylat, um sie kompatibel werden zu lassen mit dem oder den (Co-)Polyestern, Polycarbonat, Polystyrol oder Polyamid; wobei der Gehalt an (Co-)Polyestern in der ersten Polymerzusammensetzung vorzugsweise höher istals 60 Gew.-%, weiter bevorzugt höher als 75 Gew.-%, besonders bevorzugt höher als 80 Gew.-%.

5. Verfahren nach einem der Ansprüche 1 bis 4, bei dem die zweite Polymerzusammensetzung mindestens ein (Co-)Polymer enthält, ausgewählt aus den elastomeren Thermoplasten wie den elastomeren Polyester-Thermoplasten, den nicht vulkanisierten elastomeren Olefin-Thermoplasten, den elastomeren Urethan-Thermoplasten, den elastomeren Styrol-Thermoplasten, den elastomeren Polyamid-Thermoplasten, den Ethylen-Copolymeren wie den Ethylen-Vinylacetat-Copolymeren, den Ethylen-Methylacrylat-Copolymeren, den Ethylen-Ethylacrylat-Copolymeren oder den Ethylen-Butylacrylat-Copolymeren, modifiziert oder nicht modifiziert, um sie kompatibler werden zu lassen, Polycarbonat, Polystyrol, Polyamid oder (Co-)Polyester ausgewählt aus Polyglycolid oder Poly(glykolsäure), Poly(milchsäure), Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat oder Gemischen davon, vorzugsweise elastomeren Thermoplasten oder mit Maleinanhydrid gepfropften oder nicht gepfropften Ethylen-Copolymeren.

6. Verfahren nach Anspruch 3 oder nach einem der Ansprüche 4 und 5 in Kombination mit Anspruch 3, bei dem die dritte Polymerzusammensetzung zumindest ein Polymer enthält, ausgewählt aus den elastomeren Thermoplasten wie den elastomeren Polyester-Thermoplasten, den nicht vulkanisierten elastomeren Olefin-Thermoplasten, den elastomeren Urethan-Thermoplasten, den elastomeren Styrol-Thermoplasten, den elastomeren Polyamid-Thermoplasten, den Ethylen-Copolymeren wie den Ethylen-Vinylacetat-Copolymeren, den Ethylen-Methylacrylat-Copolymeren, den Ethylen-Ethylacrylat-Copolymeren oder den Ethylen-Butylacrylat-Copolymeren, modifiziert oder nicht modifiziert durch Gruppen wie Maleinanhydrid oder auch Glycidylmethacrylat, um sie kompatibler werden zu lassen, Polycarbonat, Polystyrol, Polyamid, oder (Co-)Polyester ausgewählt aus Polyglycolid oder Poly(glykolsäure), Poly(milchsäure), Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat oder Gemischen davon.

7. Verfahren nach einem der Ansprüche 1 bis 6, bei dem der oder die ersten, zweiten und/oder dritten Treibmittel unabhängig ausgewählt sind aus Isobutan, Cyclopentan und/oder Kohlendioxid.

8. Verfahren nach einem der Ansprüche 1 bis 7, bei dem die oder die ersten, zweiten und/oder dritten Polymerzusammensetzungen unabhängig weitere Zusatzstoffe enthalten wie keimbildende Zusatzstoffe wie Talkum, Calciumstearat oder Siliziumoxid, chemische Stoffe zur Beschleunigung der Zersetzung der chemischen Treibmittel wie Zinkoxid und/oder Zinkstearat, feuerhemmende Wirkstoffe, UV-Schutz-Wirkstoffe, Antioxidantien, Kristallisationsnukleierungsmittel, Verzweigungsstoffe und/oder Schmierstoffe.

9. Verfahren nach einem der Ansprüche 1 bis 8, bei dem das Schaumstoffprofil, das einen oder mehrere längsgerichtete Hohlräume mit geschlossenen Querschnitt (30) umfasst und am Verfahrensende erhalten wird, ein Isolator zur Verringerung der Wärmebrückenwirkung zwischen zwei verbundenen Bauelementen ist, wobei das Verfahren vorzugsweise einen Schritt (c') umfasst, bei dem das Außenkonturelement auf einer der Seiten des geschäumten Basisprofils ein Isolatorenkopf ist, dessen Querschnitt enger als der des geschäumten Basisprofils (15) ist und der auf der zu dem Graben (20) entgegengesetzten Seite angeordnet ist.

10. Schaumstoffprofil (10), das einen oder mehrere längsgerichtete Hohlräume mit geschlossenem Querschnitt (30) umfasst, wobei das Schaumstoffprofil (10) ein geschäumtes Basisprofil (15) mit polygonalem Querschnitt, vorzugsweise mit rechtwinkligem Querschnitt, das aus einer ersten Polymerzusammensetzung, in Gegenwart eines oder mehrerer ersten Treibmittel, extrudiert ist, umfasst, wobei die erste Polymerzusammensetzung einen oder mehrere (Co-)Polyester enthält, wobei das geschäumte Basisprofil einen Graben (20) umfasst, der durch Abtragen von Material, vorzugsweise durch Fräsen, Schneiden, Laser oder Thermofusion, gebildet ist, wobei der Graben (20) in einen oder mehrere geschlossene Hohlräume (30) parallel zu der Länge des geschäumten Basisprofils (15) durch eine Anzahl von Querstreben (25), gegebenenfalls aus Schaumstoff, die aus einer zweiten Polymerzusammensetzung extrudiert sind, unterteilt ist.

11. Schaumstoffprofil (10) nach Anspruch 10, ferner umfassend einen Teil der Außenkontur, die durch Abtragen von Material, vorzugsweise durch Fräsen, Schneiden, Laser oder Thermofusion, modifiziert ist; und/oder ferner umfassend einen Teil der Außenkontur, die durch Hinzufügen von Material, vorzugsweise durch (Co-) Extrudieren aus einer dritten Polymerzusammensetzung, vorzugsweise in Gegenwart eines oder mehreren dritten Treibmitteln, modifiziert ist, oder Aufkleben einer Anzahl von Rippen (40), auf einer oder mehreren Seiten des geschäumten Basisprofils (15) modifiziert ist.

12. Schaumstoffprofil (10) nach Anspruch 10 oder 11, wobei die erste Polymerzusammensetzung zumindest einen (Co-)Polyester enthält, ausgewählt aus Polyglycolid oder Poly(glykolsäure), Poly(milchsäure), Polycaprolacton, Polyhydroxyalkanoat, Polyethylenadipat, Polybutylensuccinat, Polyethylenterephthalat, Polybutylenterephthalat, Polytrimethylen-terephthalat, Polyethylennaphthalat, besonders bevorzugt Polyethylen-terephthalat, gegebenenfalls in Gemisch mit einem oder mehreren (Co-)-Polymeren, ausgewählt aus elastomeren Thermoplasten, wie den elastomeren Polyester-Thermoplasten, den nicht vulkanisierten elastomeren Olefin-Thermoplasten, den elastomeren Urethan-Thermoplasten, den elastomeren Styrol-Thermoplasten, den elastomeren Polyamid-Thermoplasten, Ethylen-Copolymeren wie den Ethylen-Vinylacetat-Copolymeren, den Ethylen-Methylacrylat-Copolymeren, den Ethylen-Ethylacrylat-Copolymeren oder den Ethylen-Butylacrylat-Copolymeren, modifiziert oder nicht modifiziert durch Gruppen wie Maleinanhydrid oder auch Glycidylmethacrylat, um sie kompatibel werden zu lassen mit dem oder den (Co-)Polyestern, Polycarbonat, Polystyrol oder Polyamid; wobei der Gehalt an (Co-)Polyestern in der ersten Polymerzusammensetzung vorzugsweise höher ist als 60 Gew.-%, weiter bevorzugt höher als 75 Gew.-%, besonders bevorzugt höher als 80 Gew.-%.

13. Schaumstoffprofil (10) nach einem der Ansprüche 10 bis 12, wobei die zweite Polymerzusammensetzung mindestens ein Polymer enthält, ausgewählt aus den elastomeren Thermoplasten wie den elastomeren Polyester-Thermoplasten, den nicht vulkanisierten elastomeren Olefin-Thermoplasten, den elastomeren Urethan-Thermoplasten, den elastomeren Styrol-Thermoplasten, den elastomeren Polyamid-Thermoplasten, den Ethylen-Copolymeren wie den Ethylen-Vinylacetat-Copolymeren, den Ethylen-Methylacrylat-Copolymeren, den Ethylen-Ethylacrylat-Copolymeren oder den Ethylen-Butylacrylat-Copolymeren, modifiziert oder nicht modifiziert durch Gruppen wie Maleinanhydrid oder auch Glycidylmethacrylat, um sie kompatibler werden zu lassen, Polycarbonat, Polystyrol, Polyamid, oder (Co-)Polyester ausgewählt aus Polyglycolid oder Poly(glykolsäure), Poly(milchsäure), Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat oder Gemischen davon, vorzugsweise elastomeren Thermoplasten oder mit Maleinanhydrid gepfropften oder nicht gepfropften Ethylen-Copolymeren.

14. Schaumstoffprofil (10) nach Anspruch 11 oder nach einem der Ansprüche 12 und 13 in Kombination mit Anspruch 11, wobei die dritte Polymerzusammensetzung mindestens ein (Co-)Polymer enthält, ausgewählt aus den elastomeren Thermoplasten wie den elastomeren Polyester-Thermoplasten, den nicht vulkanisierten elastomeren Olefin-Thermoplasten, den elastomeren Urethan-Thermoplasten, den elastomeren Styrol-Thermoplasten, den elastomeren Polyamid-Thermoplasten, den Ethylen-Copolymeren wie den Ethylen-Vinylacetat-Copolymeren, den Ethylen-Methylacrylat-Copolymeren, den Ethylen-Ethylacrylat-Copolymeren oder den Ethylen-Butylacrylat-Copolymeren, modifliziert oder nicht modifiziert durch Gruppen wie Maleinanhydrid oder auch Glycidylmethacrylat, um sie kompatibler werden zu lassen, Polycarbonat, Polystyrol, Polyamid, oder (Co-)Polyester ausgewählt aus Polyglycolid oder Poly(glykolsäure), Poly(milchsäure), Polycaprolacton, Polyhydroxyalkanoat, Polyethylenadipat, Polybutylensuccinat, Polyethylenterephthalat, Polybutylenterephthalat, Polytrimethylenterephthalat, Polyethylennaphthalat oder Gemischen davon.

15. Schaumstoffprofil (10) nach einem der Ansprüche 10 bis 14, wobei die oder die ersten, zweiten und/oder dritten Polymerzusammensetzungen unabhängig weitere Zusatzstoffe enthalten wie keimbildende Zusatzstoffe wie Talkum, Calciumstearat oder Siliziumoxid, chemische Stoffe zur Beschleunigung der Zersetzung der chemischen Treibmittel wie Zinkoxid und/oder Zinkstearat, feuerhemmende Wirkstoffe, UV-Schutz-Wirkstoffe, Antioxidantien, Kristallisationsnukleierungsmittel, Verzweigungsstoffe und/oder Schmierstoffe.

16. Schaumstoffprofil (10) nach einem der Ansprüche 10 bis 15, das ein Isolator zur Verringerung der Wärmebrückenwirkung zwischen zwei verbundenen Bauelementen ist, wobei der Isolator ein Außenkonturelement auf einer der Seiten des geschäumten Basisprofils (15) umfasst, das ein Isolatorenkopf (50) ist, dessen Querschnitt enger als der des geschäumten Basisprofils ist und der auf der zu dem Graben (20) entgegengesetzten Seite angeordnet ist.

## Claims

1. A method for manufacturing a foamed profile (10) comprising one or more longitudinal cavities of closed section (30), the method comprising the steps of
(a) extruding a first polymer composition in the presence of one or more first foaming agents to yield a foamed base profile (15) of polygonal section, preferably of rectangular section, the first polymer composition comprising one or more (co)polyesters,
(b) cooling the foamed base profile (15),
(c) creating a channel (20) along the length of the foamed base profile (15) by removing material, preferably by milling, cutting, laser or thermal fusion, the channel (20) forming two parallel branches in the foamed base profile, each of the branches comprising an outer surface facing away from the channel (20) and an inner surface facing towards the channel (20), and
(d) extruding inside the channel (20) a second polymer composition, which may or may not be identical to the first polymer composition, preferably in the presence of one or more second foaming agents, to yield a cross strut (25) at at least one location between the two inner surfaces of the two branches of the channel (20), so as to form at least one closed cavity (30) within the channel (20).

2. The method according to Claim 1, further comprising, after step (b), a step (c') of creating an external contour element on at least one of the sides of the foamed base profile by removing material, preferably by milling, cutting, laser or thermal fusion, step (c') preferably being performed simultaneously with step (c).

3. The method according to Claim 1 or 2, further comprising a step (x) of extruding a third polymer composition, preferably in the presence of one or more third foaming agents to yield a number of fins on one or more sides of the base profile, wherein step (x) may be carried out during step (a) by coextrusion or by separate extrusion after one of the subsequent steps, preferably before, during or after step (d).

4. The method according to any one of Claims 1 to 3, wherein the first polymer composition comprises at least one (co)polyester selected from polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, and particularly preferably polyethylene terephthalate, optionally blended with one or more (co)polymers selected from thermoplastic elastomers, such as thermoplastic polyester elastomers, unvulcanized thermoplastic olefinic elastomers, thermoplastic urethane elastomers, thermoplastic styrenic elastomers, thermoplastic polyamide elastomers, ethylene copolymers, such as ethylene-vinyl acetate copolymers, ethylene-methyl acrylate copolymers, ethylene-ethyl acrylate copolymers or ethylene-butyl acrylate copolymers, modified or unmodified by groups such as maleic anhydride or alternatively glycidyl methacrylate to compatibilize them with the (co)polyester(s), polycarbonate, polystyrene or polyamide, the content of (co)polyester(s) in the first polymer composition preferably being greater than 60% by weight, more preferably greater than 75% by weight and particularly preferably greater than 80% by weight.

5. The method according to any one of Claims 1 to 4, wherein the second polymer composition comprises at least one (co)polymer selected from thermoplastic elastomers, such as thermoplastic polyester elastomers, unvulcanized thermoplastic olefinic elastomers, thermoplastic urethane elastomers, thermoplastic styrenic elastomers, thermoplastic polyamide elastomers, ethylene copolymers, such as ethylene-vinyl acetate copolymers, ethylene-methyl acrylate copolymers, ethylene-ethyl acrylate copolymers, ethylene-butyl acrylate copolymers, modified or unmodified to compatibilize them, polycarbonate, polystyrene, polyamide or (co)polyesters selected from polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, or blends thereof, and preferably thermoplastic elastomers and ethylene copolymers, grafted or ungrafted with maleic anhydride.

6. The method according to Claim 3 or according to either one of Claims 4 and 5 in combination with Claim 3, wherein the third polymer composition comprises at least one polymer selected from thermoplastic elastomers, such as thermoplastic polyester elastomers, unvulcanized thermoplastic olefinic elastomers, thermoplastic urethane elastomers, thermoplastic styrenic elastomers, thermoplastic polyamide elastomers, ethylene copolymers, such as ethylene-vinyl acetate copolymers, ethylene-methyl acrylate copolymers, ethylene-ethyl acrylate copolymers, ethylene-butyl acrylate copolymers, modified or unmodified by groups such as maleic anhydride or alternatively glycidyl methacrylate to compatibilize them, polycarbonate, polystyrene, polyamide, or (co)polyesters selected from polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, or blends thereof.

7. The method according to any one of Claims 1 to 6, wherein the first, second and/or third foaming agent(s) is/are independently selected from isobutane, cyclopentane and/or carbon dioxide.

8. The method according to any one of Claims 1 to 7, wherein the first, second and/or third polymer compositions independently comprise other additives, such as nucleating additives e.g. talcum, calcium stearate or silica, chemical agents which accelerate the decomposition of the chemical foaming agents e.g. zinc oxide and/or zinc stearate, fire-retardant agents, UV-stabilizers, antioxidants, crystallization nucleating agents, branching agents and/or lubricants.

9. The method according to any one of Claims 1 to 8, wherein the foamed profile comprising one or more longitudinal cavities of closed section (30) obtained at the end of the method is a thermal insulator for reducing thermal bridging between two connected structural elements, the method preferably comprising a step (c') in which the external contour element on one of the sides of the foamed base profile is an insulator head of narrower section than the foamed base profile (15) arranged on the opposite side of the channel (20).

10. A foamed profile (10) comprising one or more longitudinal cavities of closed section (30), the foamed profile (10) comprising a foamed base profile (15) of polygonal section, preferably of rectangular section, extruded from a first polymer composition in the presence of one of more first foaming agents, the first polymer composition comprising one or more polyesters, the foamed base profile comprising a channel (20) formed by removing material, preferably by milling, cutting, laser or thermal fusion, said channel (20) being compartmented into one or more closed cavities (30), parallel to the length of the foamed base profile (15), by a number of, optionally foamed, cross struts (25) extruded from a second polymer composition.

11. The foamed profile (10) according to Claim 10, further comprising part of the external contour modified by removing material, preferably by milling, cutting, laser or thermal fusion, and/or further comprising part of the external contour modified by adding material, preferably by (co)extrusion of a third polymer composition, preferably in the presence of one or more third foaming agents, or adhesive bonding of a number of fins (40) onto one or more sides of the foamed base profile (15).

12. The foamed profile (10) according to either one of Claims 10 or 11, wherein the first polymer composition comprises at least one (co)polyester selected from polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, and particularly preferably polyethylene terephthalate, optionally blended with one or more (co)polymers selected from thermoplastic elastomers, such as thermoplastic polyester elastomers, unvulcanized thermoplastic olefinic elastomers, thermoplastic urethane elastomers, thermoplastic styrenic elastomers, thermoplastic polyamide elastomers, ethylene copolymers, such as ethylene-vinyl acetate copolymers, ethylene-methyl acrylate copolymers, ethylene-ethyl acrylate copolymers or ethylene-butyl acrylate copolymers, modified or unmodified by groups such as maleic anhydride or alternatively glycidyl methacrylate to compatibilize them with the (co)polyester(s), polycarbonate, polystyrene or polyamide, the content of (co)polyester(s) in the first polymer composition preferably being greater than 60% by weight, more preferably greater than 75% by weight and particularly preferably greater than 80% by weight.

13. The foamed profile (10) according to any one of Claims 10 to 12, wherein the second polymer composition comprises at least one polymer selected from thermoplastic elastomers, such as thermoplastic polyester elastomers, unvulcanized thermoplastic olefinic elastomers, thermoplastic urethane elastomers, thermoplastic styrenic elastomers, thermoplastic polyamide elastomers, ethylene copolymers, such as ethylene-vinyl acetate copolymers, ethylene-methyl acrylate copolymers, ethylene-ethyl acrylate copolymers, ethylene-butyl acrylate copolymers, modified or unmodified by groups such as maleic anhydride or alternatively glycidyl methacrylate to compatibilize them, polycarbonate, polystyrene, polyamide or (co)polyesters selected from polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, or blends thereof, and preferably thermoplastic elastomers and ethylene copolymers, grafted or ungrafted with maleic anhydride.

14. The foamed profile (10) according to Claim 11 or according to either one of Claims 12 and 13 combined with Claim 11, wherein the third polymer composition comprises at least one polymer selected from thermoplastic elastomers, such as thermoplastic polyester elastomers, unvulcanized thermoplastic olefinic elastomers, thermoplastic urethane elastomers, thermoplastic styrenic elastomers, thermoplastic polyamide elastomers, ethylene copolymers, such as ethylene-vinyl acetate copolymers, ethylene-methyl acrylate copolymers, ethylene-ethyl acrylate copolymers, ethylene-butyl acrylate copolymers, modified or unmodified by groups such as maleic anhydride or alternatively glycidyl methacrylate to compatibilize them, polycarbonate, polystyrene, polyamide, or (co)polyesters selected from polyglycolide or poly(glycolic acid), poly(lactic acid), polycaprolactone, polyhydroxyalkanoate, polyethylene adipate, polybutylene succinate, polyethylene terephthalate, polybutylene terephthalate, polytrimethylene terephthalate, polyethylene naphthalate, or blends thereof.

15. The foamed profile (10) according to any one of Claims 10 to 14, wherein the first, second and/or third polymer compositions independently comprise other additives, such as nucleating additives e.g. talcum, calcium stearate or silica, chemical agents which accelerate the decomposition of the chemical foaming agents e.g. zinc oxide and/or zinc stearate, fire-retardant agents, UV-stabilizers, antioxidants, crystallization nucleating agents, branching agents and/or lubricants.

16. The foamed profile (10) according to any one of Claims 10 to 15, which is an insulator for reducing thermal bridging between two connected structural elements, the insulator comprising an external contour element on one of the sides of the foamed base profile (15) which is an insulator head (50) of narrower section than the foamed base profile and which is arranged on the opposite side of the channel (20).
